(19) Europäisches Patentamt
European Patent Office
Office européen des brevets

(11) **EP 3 039 779 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(21) Anmeldenummer: **14772086.6**

(22) Anmeldetag: **11.09.2014**

(51) Int Cl.:
*H02M 3/335* (2006.01)     *H02M 1/00* (2007.01)

(86) Internationale Anmeldenummer:
**PCT/EP2014/069379**

(87) Internationale Veröffentlichungsnummer:
**WO 2015/043972 (02.04.2015 Gazette 2015/13)**

(54) **ANORDNUNG MIT POTENZIALGETRENNTER STROMVERSORGUNGSEINRICHTUNG**

ASSEMBLY HAVING A POTENTIAL-ISOLATED POWER SUPPLY DEVICE

AGENCEMENT COMPORTANT UN DISPOSITIF D'ALIMENTATION EN COURANT ISOLÉ ÉLECTRIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2013 DE 102013219645**

(43) Veröffentlichungstag der Anmeldung:
**06.07.2016 Patentblatt 2016/27**

(73) Patentinhaber: **Siemens Aktiengesellschaft 80333 München (DE)**

(72) Erfinder:
• **EUE, Wolfgang 38162 Cremlingen (DE)**
• **OKYERE, Philip Fosu 38100 Braunschweig (DE)**

(56) Entgegenhaltungen:
**EP-A1- 0 505 982     DE-A1- 10 223 010
US-A- 5 448 465     US-B1- 6 563 718**

**Beschreibung**

Anordnung mit potenzialgetrennter Stromversorgungseinrichtung Die Erfindung bezieht sich auf eine Anordnung mit einer Eingangsseite und einer von der Eingangsseite elektrisch potenzialgetrennten Ausgangsseite sowie mit einer potenzialgetrennten Stromversorgungseinrichtung. Die Stromversorgungseinrichtung weist einen Eingang auf der Eingangsseite der Anordnung zum Anlegen einer Eingangsspannung und mindestens zwei vom Eingang potenzialgetrennte Ausgänge auf der Ausgangsseite der Anordnung zur Ausgabe mindestens zweier Ausgangsspannungen auf.

Werden Anordnungen dieser Art im Bereich der Schienenfahrzeugtechnik eingesetzt, so besteht im Allgemeinen die Forderung, die Stromversorgungseinrichtung abzuschalten, wenn bereits eine der Ausgangsspannungen der Stromversorgungseinrichtung eine zugewiesene Mindestspannung nicht erreicht oder im laufenden Betrieb nicht aufrechterhalten kann. DE 102 23 010 A1 offenbart Ein Stromversorgung mit ein Eingang und zwei Ausgänge. Die zwei Ausgangsstufen sind mit Transformatoren ausgebildet und deshalb potenzialgetrennt sind. Jeder Ausgangsstufe enthält seine eigene Überwachungseinrichtung die mit einem entsprechenden Optokoppler mit der Treiberstufe verbunden ist. Die Überwachungseinrichtungen überwachen die Ausgangsspannungen der Ausgänge. Die Komparatoreingänge der Treiberstufen sind mit dem Optokoppler verbunden um die Ausgangsspannung zu regulieren. Der Erfindung liegt demgemäß die Aufgabe zugrunde, eine Anordnung mit einer Spannungsüberwachung bereitzustellen, die zuverlässig arbeitet und sich mit minimalem Komponenteneinsatz herstellen lässt.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass an die mindestens zwei Ausgänge der potenzialgetrennten Stromversorgungseinrichtung eine Überwachungseinrichtung angeschlossen ist, die die Ausgangsspannungen auf das Erreichen einer ausgangsindividuell zugeordneten Mindestspannung überwacht und ausgangsseitig einen Strom mit einer Sollhöhe erzeugt, wenn alle Ausgangsspannungen ihre jeweilige ausgangsindividuell zugeordnete Mindestspannung erreichen, an die Überwachungseinrichtung ein Optokopplereingang eines Optokopplers angeschlossen ist, dessen Optokopplerausgang mit einer elektrisch auf der Eingangsseite der Anordnung befindlichen Steuereinrichtung verbunden ist, und die Steuereinrichtung ein Fehlersignal erzeugt, wenn am Optokopplerausgang ein Ausgangssignal vorliegt, das von dem bei einem Strom mit der genannten Sollhöhe auftretenden Sollausgangssignal über ein vorgegebenes Maß hinaus abweicht.

Ein wesentlicher Vorteil der erfindungsgemäßen Anordnung ist darin zu sehen, dass eine Rückmeldung bezüglich des Status der Ausgangsspannungen mit einem einzigen Optokoppler erreicht werden kann. Es ist also mit anderen Worten nicht nötig, für jede Ausgangsspannung auf der Ausgangsseite der Anordnung jeweils einen individuellen Rückkopplungspfad bzw. einen individuellen Optokoppler vorzusehen.

Besonders einfach und damit vorteilhaft lässt sich eine Rückmeldung hinsichtlich der Höhe der Ausgangsspannungen erreichen, wenn die Überwachungseinrichtung für jeden der Ausgänge der potenzialgetrennten Stromversorgungseinrichtung jeweils eine gesteuerte Stromquelle aufweist, die die Ausgangsspannung am jeweils zugeordneten Ausgang auf das Erreichen der ausgangsindividuell zugeordneten Mindestspannung überwacht und bei Erreichen der jeweiligen Mindestspannung ausgangsseitig einen Ausgangsstrom erzeugt und die Stromquellen ausgangsseitig an den Optokopplereingang des Optokopplers angeschlossen sind und der Optokopplereingang des Optokopplers mit dem aus den Ausgangsströmen der Stromquellen gebildeten Summenstrom beaufschlagt ist.

Bezüglich der Ausgestaltung der gesteuerten Stromquellen wird es als vorteilhaft angesehen, wenn die gesteuerten Stromquellen jeweils einen Komparator aufweisen, der die Ausgangsspannung am jeweils zugeordneten Ausgang auf das Erreichen der ausgangsindividuell zugeordneten Mindestspannung überwacht und bei Erreichen der jeweiligen Mindestspannung ausgangsseitig eine Komparatorausgangsspannung erzeugt, und am Komparatorausgang der Komparatoren jeweils ein Widerstand angeschlossen ist, die Widerstände der Stromquellen ausgangsseitig an den Optokopplereingang des Optokopplers angeschlossen sind und der Optokopplereingang des Optokopplers mit dem Summenstrom der durch die Widerstände fließenden Ströme beaufschlagt ist.

Gemäß einer ersten bevorzugten Variante ist vorgesehen, dass die Widerstände der Überwachungseinrichtung gleich groß sind und der von den Komparatorausgängen der Komparatoren in den Optokopplereingang eingespeiste Summenstrom anzeigt, wie viele der Ausgangsspannungen die jeweilige Mindestspannung erreichen. Bei dieser Ausgestaltung lässt sich in einfacher Weise feststellen, ob alle oder wie viele der Ausgangsspannungen ihre jeweilige Mindestspannung erreichen.

Bei einer anderen besonders bevorzugten Ausgestaltung ist vorgesehen, dass die Widerstände der Überwachungseinrichtung unterschiedlich groß sind und der von den Komparatorausgängen der Komparatoren in den Optokopplereingang eingespeiste Summenstrom - sozusagen amplitudencodiert - anzeigt, welche der Ausgangsspannungen die jeweilige Mindestspannung erreichen.

Eine entsprechende Codierung des Summenstroms durch die Höhe der Widerstände lässt sich in besonders einfacher Weise erreichen, wenn - im Falle einer potenzialgetrennten Stromversorgungseinrichtung mit n Ausgängen - die n Widerstände R1 bis Rn der Überwachungseinrichtung von der Widerstandshöhe her gestaffelt sind gemäß

$$R1 = (1 / (2^n - 1)) * Rg,$$

$$R2 = (2 / (2^n - 1)) * Rg, \dots$$

$$Rn = (2^{(n-1)} / (2^n - 1)) * Rg,$$

wobei Rg den kleinsten vorgesehen Einzelwiderstandswert mit $2^n$-1 multipliziert bezeichnet.

Als besonders vorteilhaft wird es angesehen, wenn ein Anlernen der Überwachungseinrichtung hinsichtlich des Übertragungsverhaltens der Überwachungseinrichtung und/oder des Optokopplers erfolgen kann; demgemäß ist bei einer weiteren vorteilhaften Ausgestaltung der Anordnung vorgesehen, dass die potenzialgetrennte Stromversorgungseinrichtung einen Steuereingang aufweist, der ein individuelles Ein- und Ausschalten der Ausgangsspannungen und/oder ein zeitlich versetztes Einschalten der Ausgangsspannungen ermöglicht.

Vorzugsweise ist die Steuereinrichtung derart ausgestaltet, dass sie bei Inbetriebnahme der potenzialgetrennten Stromversorgungseinrichtung die Ausgangsspannungen einzeln nacheinander oder zeitlich versetzt einschaltet, die am Optokopplerausgang jeweils auftretenden Ausgangssignale unter Bildung von Referenzwerten misst und die Referenzwerte zum Kalibrieren der durch die Überwachungseinrichtung und den Optokoppler gebildeten Messstrecke und/oder zum Kalibrieren des Übertragungsverhaltens des Optokopplers heranzieht.

Die Erfindung bezieht sich darüber hinaus auf ein Verfahren zum Überwachen einer Anordnung mit einer Eingangsseite und einer von der Eingangsseite elektrisch potenzialgetrennten Ausgangsseite sowie mit einer potenzialgetrennten Stromversorgungseinrichtung, die aufweist: einen Eingang auf der Eingangsseite der Anordnung zum Anlegen einer Eingangsspannung und mindestens zwei vom Eingang potenzialgetrennte Ausgänge auf der Ausgangsseite der Anordnung zur Ausgabe mindestens zweier Ausgangsspannungen.

Erfindungsgemäß ist vorgesehen, dass die Ausgangsspannungen auf das Erreichen einer ausgangsindividuell zugeordneten Mindestspannung überwacht werden und ausgangsseitig ein Strom mit einer Sollhöhe erzeugt wird, wenn alle Ausgangsspannungen ihre jeweilige ausgangsindividuell zugeordnete Mindestspannung erreichen, und der Strom in einen Optokopplereingang eines Optokopplers eingespeist wird, dessen Optokopplerausgang mit einer elektrisch auf der Eingangsseite der Anordnung befindlichen Steuereinrichtung verbunden ist, und ein Fehlersignal erzeugt wird, wenn am Optokopplerausgang ein Ausgangssignal vorliegt, das von dem bei einem Strom mit der genannten Sollhöhe auftretenden Sollausgangssignal über ein vorgegebenes Maß hinaus abweicht.

Bezüglich der Vorteile des erfindungsgemäßen Verfahrens sei auf die obigen Ausführungen im Zusammenhang mit der erfindungsgemäßen Anordnung verwiesen, da die Vorteile der erfindungsgemäßen Anordnung denen des erfindungsgemäßen Verfahrens im Wesentlichen entsprechen.

Als besonders vorteilhaft wird es angesehen, wenn zumindest bei Inbetriebnahme der potenzialgetrennten Stromversorgungseinrichtung die Ausgangsspannungen der potenzialgetrennten Stromversorgungseinrichtung einzeln nacheinander oder zeitlich versetzt eingeschaltet werden, die am Optokopplerausgang jeweils auftretenden Ausgangssignale unter Bildung von Referenzwerten gemessen werden und die Referenzwerte zum Kalibrieren der durch die Überwachungseinrichtung und den Optokoppler gebildeten Messstrecke und/oder zum Kalibrieren des Übertragungsverhaltens des Optokopplers herangezogen werden.

Die Erfindung wird nachfolgend anhand von Ausführungsbeispielen näher erläutert; dabei zeigen beispielhaft

Figur 1   ein erstes Ausführungsbeispiel für eine erfindungsgemäße Anordnung mit einer potenzialgetrennten Stromversorgungseinrichtung sowie einer die Arbeitsweise der Stromversorgungseinrichtung überwachenden Überwachungseinrichtung,

Figur 2   ein zweites Ausführungsbeispiel für eine erfindungsgemäße Anordnung mit Stromversorgungseinrichtung und Überwachungseinrichtung und

Figur 3   zur allgemeinen Erläuterung ein Ausführungsbeispiel für eine potenzialgetrennte Stromversorgungseinrichtung, die bei den Anordnungen gemäß den Figuren 1 oder 2 eingesetzt werden kann.

In den Figuren werden der Übersicht halber für identische oder vergleichbare Komponenten stets dieselben Bezugszeichen verwendet.

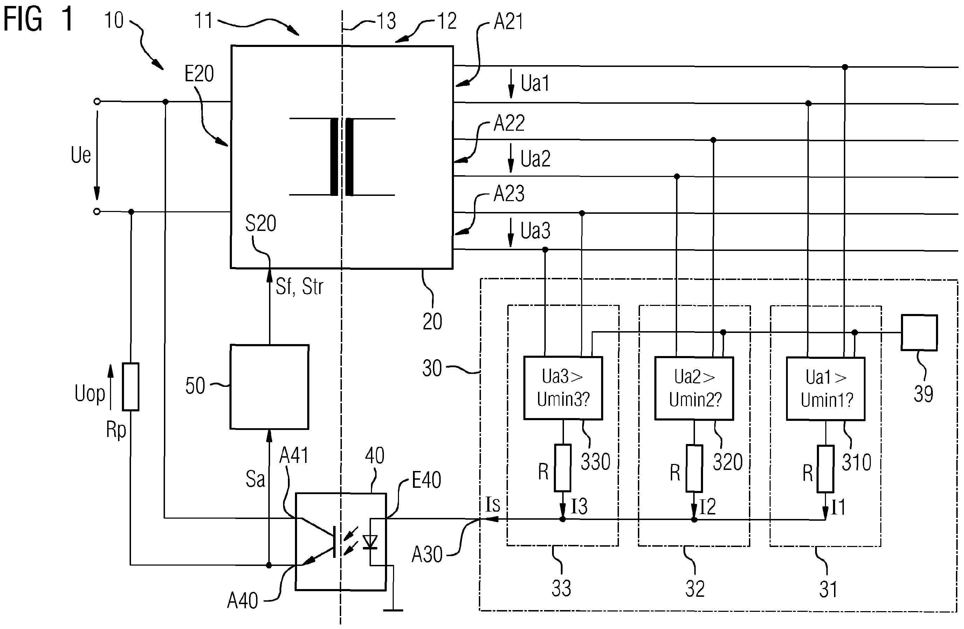

Die Figur 1 zeigt eine Anordnung 10 mit einer Eingangsseite 11 und einer von der Eingangsseite 11 elektrisch potenzialgetrennten Ausgangsseite 12. Die Potenzialtrennung zwischen der Eingangsseite 11 und der Ausgangsseite 12 ist in der Figur 1 schematisch mit einer gestrichelten Linie 13 angedeutet.

Die Anordnung 10 umfasst eine potenzialgetrennte Stromversorgungseinrichtung 20, die einen Eingang E20 auf der Eingangsseite 11 der Anordnung 10 zum Anlegen einer Eingangsspannung Ue aufweist.

Die Stromversorgungseinrichtung 20 ist auf der Ausgangsseite 12 der Anordnung 10 mit drei Ausgängen A21, A22 und A23 ausgestattet, die zur Ausgabe dreier Ausgangsspannungen Ua1, Ua2 und Ua3 dienen. Bei dem nachfolgend erläuterten Ausführungsbeispiel sind die drei Ausgangsspannungen Ua1, Ua2 und Ua3 unterschiedlich hoch, jedoch könnten sie alternativ auch gleich groß sein.

Zur Überwachung der Arbeitsweise der Stromversorgungseinrichtung 20 ist die Anordnung 10 mit einer Überwachungseinrichtung 30 ausgestattet, die drei spannungsgesteuerte Stromquellen 31, 32 und 33 umfasst.

Die Stromquelle 31 weist einen Komparator 310 auf, der eingangsseitig an den Ausgang A21 der Stromversorgungseinrichtung 20 angeschlossen und mit der Ausgangsspannung Ua1 beaufschlagt ist. Am Ausgang des Komparators 310 ist ein Widerstand R angeschlossen, durch den ein Strom I1 fließt, wenn der Komparator 310 eine Ausgangsspannung - nachfolgend Komparatorspannung genannt - am Komparatorausgang erzeugt. Der Komparator 310 wird den Widerstand R mit der Komparatorspannung beaufschlagen, wenn die Ausgangsspannung Ua1 am Ausgang A21 der Stromversorgungseinrichtung 20 eine vorgegebene Mindestspannung Umin1 erreicht oder überschreitet. Andernfalls, wenn also die Ausgangsspannung Ua1 die Mindestspannung Umin1 nicht erreicht oder überschreitet, wird der Komparator 310 eine Komparatorspannung von Null erzeugen bzw. keinen Stromfluss durch den Widerstand R hervorrufen. Die durch den Komparator 310 und den Widerstand R gebildete spannungsgesteuerte Stromquelle 31 erzeugt also ausgangsseitig einen Strom I1, wenn die Ausgangsspannung Ua1 die Mindestspannung Umin1 erreicht oder überschreitet und andernfalls keinen Strom.

In entsprechender Weise sind die beiden anderen spannungsgesteuerten Stromquellen 32 und 33 ausgestaltet. Auch sie weisen jeweils einen Komparator 320 bzw. 330 auf, der mit einer der Ausgangsspannungen Ua2 bzw. Ua3 der Ausgänge A22 bzw. A23 beaufschlagt ist und dem ein Widerstand R nachgeordnet ist.

Zur Strom- bzw. Spannungsversorgung der Komparatoren 310, 320 und 330 dient bei dem Ausführungsbeispiel gemäß Figur 1 eine Spannungsversorgungseinrichtung 39, die ihrerseits vorzugsweise von einer, mehreren oder allen Ausgangsspannungen Ua1, Ua2 und/oder Ua3 mit Strom versorgt wird. Die Spannungsversorgungseinrichtung 39 umfasst vorzugsweise einen Energiespeicher, beispielsweise in Form eines Kondensators, zwecks Energiezwischenspeicherung, damit im Falle eines Ausfalles der speisenden Ausgangsspannungen Ua1, Ua2 und/oder Ua3 ein Weiterbetrieb der Überwachungseinrichtung 30 für eine gewisse Mindestzeitspanne möglich bleibt.

Die Ausgangsströme I1, I2 und I3 der drei Stromquellen 31, 32 und 33 bilden einen Summenstrom Is, der an einem Ausgang A30 die Überwachungseinrichtung 30 verlässt und in einen Optokopplereingang E40 eines Optokopplers 40 eingespeist wird. Der Optokoppler 40, der vorzugsweise einen Fototransistor umfasst, dient zur Potenzialtrennung zwischen der Eingangsseite 11 und der Ausgangsseite 12 der Anordnung 10 und ist daher bei der Darstellung gemäß Figur 1 im Bereich der gestrichelten Linie 13 angeordnet.

Die Optokopplerausgänge A40 und A41 des Optokopplers 40 sind über einen Vorwiderstand Rp mit der Eingangsspannung Ue am Eingang E20 der Stromversorgungseinrichtung 20 beaufschlagt; diese Beschaltung des Optokopplers 40 ist jedoch nur beispielhaft zu verstehen, der Optokoppler 40 könnte auch mit einer anderen Spannung auf der Eingangsseite 11 der Anordnung 10 beaufschlagt sein.

Der Optokopplerausgang A40 steht mit einer Steuereinrichtung 50 in Verbindung, die die Spannung Uop am Optokopplerausgang A40 überwacht und als Ausgangssignal Sa des Optokopplers 40 auswertet.

Die Steuereinrichtung 50 ist derart ausgestaltet, dass sie ein Fehlersignal Sf erzeugt, wenn sie anhand des Ausgangssignals Sa bzw. der Spannung Uop am Optokopplerausgang A40 feststellt, dass eine oder mehrere der Ausgangsspannungen Ua1, Ua2 oder Ua3 auf der Ausgangsseite der Stromversorgungseinrichtung 20 eine jeweils ausgangsindividuell zugeordnete Mindestspannung Umin1, Umin2 oder Umin3 nicht erreichen. Das Fehlersignal Sf kann zur Ansteuerung einer in der Figur 1 nicht dargestellten Anzeigeeinrichtung dienen und/oder dazu eingesetzt werden, die Stromversorgungseinrichtung 20 abzuschalten oder neu zu starten.

Die Anordnung 10 gemäß Figur 1 kann beispielsweise wie folgt betrieben werden:

Im eingeschalteten Zustand der Stromversorgungseinrichtung 20 wird diese auf der Ausgangsseite 12 der Anordnung 10 drei Ausgangsspannungen Ua1, Ua2 und Ua3 erzeugen, die von der Überwachungseinrichtung 30 überwacht werden. Zur Überwachung dienen die drei Stromquellen 31, 32 und 33, die in Abhängigkeit von der eingangsseitig anliegenden Ausgangsspannung Ua1, Ua2 bzw. Ua3 einen Strom I1, I2 oder I3 erzeugen und in den Optokopplereingang E40 des Optokopplers 40 einspeisen.

Nachfolgend wird beispielhaft davon ausgegangen, dass die Ausgangsspannung Ua1 am Ausgang A21 mindestens Umin1 = 3 V, die Ausgangsspannung Ua2 am Ausgang A22 mindestens Umin2 = 5 V und die Ausgangsspannung Ua3 am Ausgang A23 mindestens Umin3 = 24 V betragen soll.

Demgemäß wird der Komparator 310 der Stromquelle 31 die Ausgangsspannung Ua3 mit einer Mindestspannung Umin1 = 3 V vergleichen und ausgangsseitig eine Komparatorausgangsspannung erzeugen, durch die ein Strom I1 durch den Widerstand R der Stromquelle 31 getrieben wird, wenn die Ausgangsspannung Ua1 die Mindestspannung von 3 V erreicht oder überschreitet.

In entsprechender Weise werden die Stromquellen 32 und 33 Ströme I2 und I3 erzeugen, wenn die Ausgangsspannungen Ua2 und Ua3 die vorgegebenen Mindestspannungen von Umin2 = 5 V und Umin3 = 24 V erreichen oder überschreiten.

Mit den drei Strömen I1, I2 und I3 der drei Stromquellen 31, 32 und 33 wird ein Summenstrom Is gebildet, der in den Optokopplereingang E40 eingespeist wird und zu einem Ausgangssignal Sa führt.

Wenn also alle Ausgangsspannungen Ua1, Ua2 und Ua3 ihre jeweilige Mindestspannung Umin1, Umin2 und Umin3 erreichen, wird der Summenstrom Is eine von der Komparatorausgangsspannung der drei Komparatoren 310, 320 und 330 sowie der Höhe der Widerstände R abhängige Sollhöhe (bzw. Mindesthöhe) erreichen, die ein entsprechendes Sollausgangssignal Sa am Eingang der Steuereinrichtung 50 hervorruft.

Bei dem Ausführungsbeispiel gemäß Figur 1 wird beispielhaft davon ausgegangen, dass die drei Komparatoren 310, 320 und 330, bis auf unterschiedliche Mindestspannungsvorgaben, jeweils identisch sind und als Komparatorausgangsspannungen dieselben Spannungen erzeugen. Auch wird davon ausgegangen, dass die drei Widerstände R der drei Stromquellen 31, 32 und 33 identisch sind.

Fällt bei dem Ausführungsbeispiel gemäß Figur 1 eine der Ausgangsspannungen aus und erreichen demgemäß nur zwei der drei Ausgangsspannungen ihre Mindestspannung, so wird der Summenstrom Is auf zwei Drittel der Sollhöhe, die bei drei korrekten Ausgangsspannungen erreicht wird (siehe oben), abfallen; dies schlägt sich in der Spannung Uop am Optokopplerausgang A40 und dem Ausgangssignal Sa entsprechend nieder. Die Steuereinrichtung 50 kann somit anhand des Ausgangssignals Sa bzw. anhand des Summenstroms Is feststellen, dass nur noch zwei der drei Ausgangsspannungen den jeweiligen Mindestwert erreichen.

In entsprechender Weise wird die Steuereinrichtung 50 feststellen, wenn nur noch eine der drei Ausgangsspannungen ihre Mindestspannung erreicht und zwei Ausgangsspannungen ausgefallen sind, weil in diesem Falle der Summenstrom Is auf ein Drittel der Sollhöhe, die bei drei korrekten Ausgangsspannungen auftritt, abfallen wird.

Wird gar kein Summenstrom Is bzw. ein Summenstrom Is = 0 erzeugt, so ändert sich das Ausgangssignal Sa ebenfalls, so dass die Steuereinrichtung 50 auch einen Ausfall aller drei Ausgangsspannungen Ua1, Ua2 und Ua3 feststellen kann.

Zusammengefasst ist bei der Anordnung 10 gemäß Figur 1 die Steuereinrichtung 50 in der Lage, den Zustand der Ausgangsspannungen Ua1, Ua2 und Ua3 anhand des Rückkopplungssignals eines einzigen Optokopplers 40 zu erfassen. Falls die Steuereinrichtung 50 einen Fehler feststellt, so erzeugt sie ein Fehlersignal Sf, beispielsweise in Form eines Abschaltsignals, mit dem die Stromversorgungseinrichtung 20 abgeschaltet wird.

Falls das Übertragungsverhalten des Optokopplers 40 vorab mangels ausreichender Spezifikation nicht bekannt ist, wird es als vorteilhaft angesehen, wenn das Einschalten der drei Ausgangsspannungen Ua1, Ua2 und Ua3 nicht gleichzeitig, sondern zeitlich gestaffelt nacheinander erfolgt. Beispielsweise wird zunächst die Ausgangsspannung Ua1 eingeschaltet und das Erreichen der Mindestspannung Umin1 abgewartet. Sobald die Ausgangsspannung Ua1 die Mindestspannung Umin1 erreicht hat, wird ein Strom I1 durch den Optokopplereingang E40 in den Optokoppler 40 eingespeist und ein Ausgangssignal Sa erzeugt, das das Erreichen der Mindestspannung Umin1 anzeigt. Die Steuereinrichtung 50 wird die Höhe des Ausgangssignals Sa als Referenzwert für das Vorliegen einer einzigen ausreichend hohen Ausgangsspannung ansehen und zur Kalibrierung der durch die Überwachungseinrichtung 30 und den Optokoppler 40 gebildeten Messstrecke bzw. zur Kalibrierung des Übertragungsverhaltens des Optokopplers 40 heranziehen. Das Auslösen des gestaffelten Einschaltens erfolgt vorzugsweise durch die Steuereinrichtung 50, beispielsweise durch ein Triggersignal Str am Steuereingang S20.

Anschließend wird beispielsweise zu der Ausgangsspannung Ua1 die Ausgangsspannung Ua2 zugeschaltet, so dass sich der Summenstrom Is auf den Wert Is = I1 + I2 erhöhen wird. Die entsprechende Erhöhung des Summenstroms Is führt zu einer entsprechenden Veränderung des Ausgangssignals Sa, das die Steuereinrichtung 50 als weiteren Referenzwert zur Kalibrierung verwenden wird.

Anschließend wird zusätzlich die Ausgangsspannung Ua3 eingeschaltet, was zu einem maximalen Summenstrom Is = I1 + I2 + I3 und zu einem entsprechenden Ausgangssignal Sa führt, das die Steuereinrichtung 50 wiederum zwecks Kalibrierung als Referenzwert abspeichern wird.

Zusammengefasst wird durch das zeitlich gestaffelte Einschalten der Ausgangsspannungen Ua1, Ua2 und Ua3 also eine Kalibrierung der Messstrecke seitens der Steuereinrichtung 50 ermöglicht. Die Reihenfolge, mit der die Ausgangsspannungen Ua1, Ua2 und Ua3 gestaffelt eingeschaltet werden, ist dabei selbstverständlich beliebig.

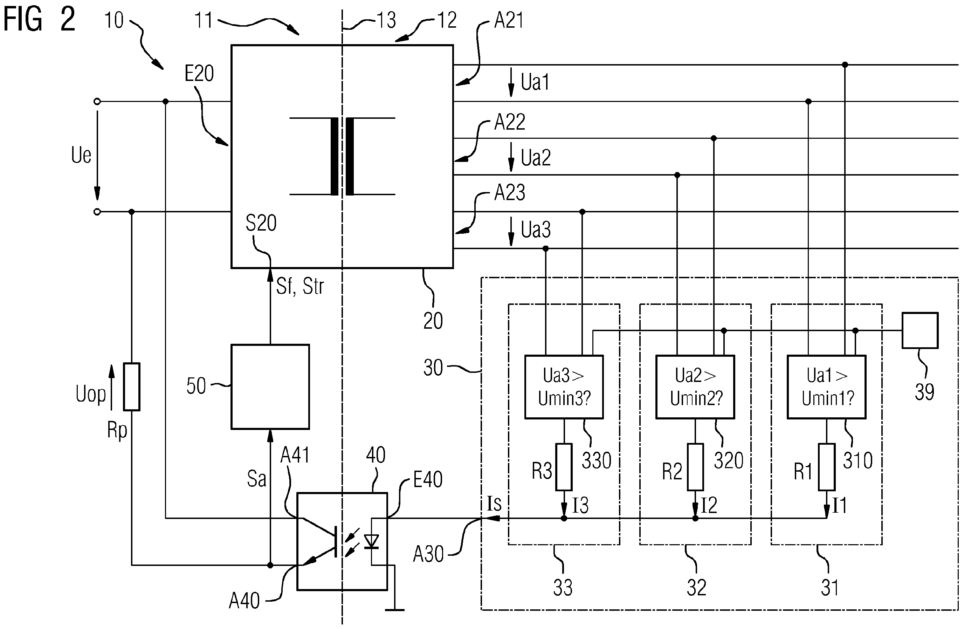

Bei dem Ausführungsbeispiel gemäß Figur 1 ist anhand des Summenstroms Is - wie oben erläutert - also die Feststellung möglich, wie viele der Ausgangsspannungen Ua1, Ua2 und Ua3 ihren jeweiligen Mindestwert erreichen. Falls es zu einem Ausfall einer oder zweier Ausgangsspannungen kommt, lässt sich auf der Eingangsseite 11 der Anordnung 10 bzw. in der Steuereinrichtung 50 jedoch nicht feststellen, welche Ausgangsspannungen betroffen sind. Um eine Feststellung, welche Ausgangsspannungen ausgefallen sind, auch auf der Eingangsseite 10 treffen zu können, ist bei dem Ausführungsbeispiel gemäß Figur 2 zusätzlich eine Codierung der Stromhöhe der drei Stromquellen 31, 32 und 33 vorgesehen. Die Codierung sieht vor, dass jede Stromquelle 31, 32 und 33 einen individuellen Ausgangsstrom erzeugt, wenn die zugeordnete Ausgangsspannung die jeweiligen Mindestspannung erreicht oder überschreitet.

Bei dem Ausführungsbeispiel gemäß Figur 2 wird die Codierung der Ströme I1, I2 und I3 durch unterschiedliche Widerstände erreicht, die den Komparatoren 310, 320 und 330 zugeordnet sind, während als Komparatorausgangsspannungen neben 0 V nur identische Spannungswerte vorgesehen sind. Die Widerstände R1, R2 und R3 können beispielsweise wie folgt gewählt werden:

$$R1 = (1 / 7) * Rg$$

$$R2 = (2 / 7) * Rg$$

$$R3 = (4 / 7) * Rg$$

wobei Rg den kleinsten vorgesehenen Einzelwiderstandswert mit 7 multipliziert bezeichnet. Der kleinste vorgesehene Einzelwiderstandswert bestimmt mit der vorgesehenen Komparatorausgangsspannung den Strom der ergiebigsten Stromquelle und stellt somit einen zweckmäßgen Ausgangspunkt für die Dimensionierung der Widerstände dar.

Durch die beschriebene Dimensionierung der Widerstände relativ zueinander ist es möglich, anhand der Höhe des Summenstroms Is bzw. an der Höhe des Ausgangssignals Sa in der Steuereinrichtung 50 festzustellen, welche Ausgangsspannungen die Mindestspannung erreichen und welche nicht. Bezogen auf einen maximalen Strom Is_max am Optokopplereingang E40 für den Fall, dass alle Ausgangsspannungen Ua1, Ua2 und Ua3 ausreichend groß sind, werden folgende Ströme Is am Optokopplereingang E40 im Fehlerfalle auftreten:

Is = Is_max    maximaler Summenstrom Is, alle Ausgangsspanungen ausreichend groß
Is = 6/7 * Is_max    im Falle einer Ausgangsspannung Ua3 außerhalb der Spezifikation
Is = 5/7 * Is_max    im Falle einer Ausgangsspannung Ua2 außerhalb der Spezifikation
Is = 4/7 * Is_max    im Falle von Ausgangsspannungen Ua2 und Ua3 außerhalb der Spezifikation
Is = 3/7 * Is_max    im Falle einer Ausgangsspannung Ua1 außerhalb der Spezifikation
Is = 2/7 * Is_max    im Falle von Ausgangsspannungen Ua1 und Ua3 außerhalb der Spezifikation
Is = 1/7 * Is_max    im Falle von Ausgangsspannungen Ua1 und Ua2 außerhalb der Spezifikation
Is = 0    falls alle Ausgangsspannungen außerhalb der Spezifikation liegen

Um auch bei der Anordnung 10 gemäß Figur 2 ein Anlernen der Steuereinrichtung 50 bzw. ein Kalibrieren der durch die Überwachungseinrichtung 30 und den Optokoppler 40 gebildeten Messstrecke zu ermöglichen, werden beim Einschalten der Stromversorgungseinrichtung 20 vorzugsweise die Ausgangsspannungen Ua1, Ua2 und Ua3 nicht gleichzeitig, sondern gestaffelt nacheinander eingeschaltet, wie dies im Zusammenhang mit der Figur 1 oben erläutert wurde. Die obigen Ausführungen gelten hier entsprechend.

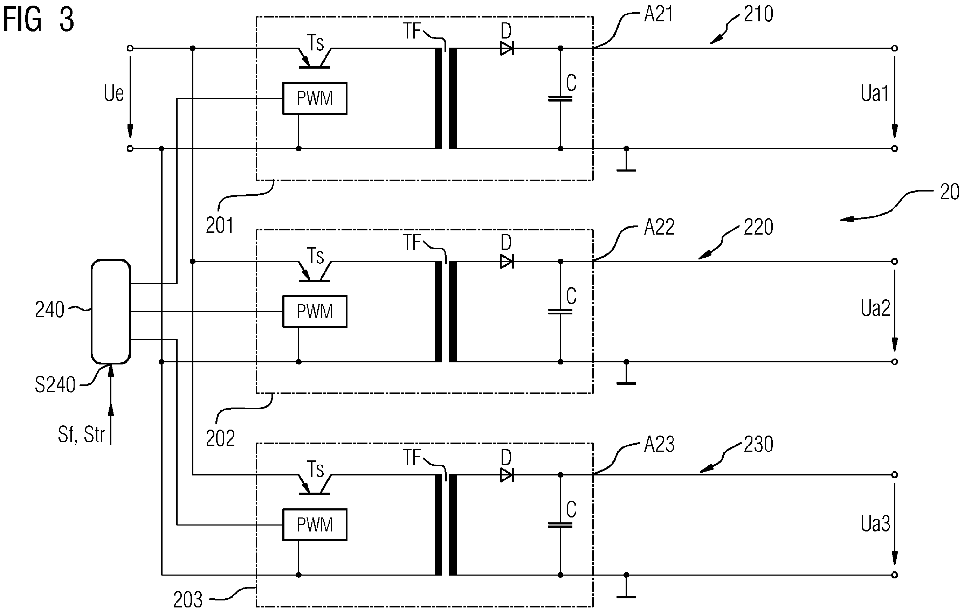

Die bei den Anordnungen 10 gemäß den Figuren 1 und 2 verwendete potenzialgetrennte Stromversorgungseinrichtung 20 kann beliebig ausgestaltet sein. Ein Ausführungsbeispiel für eine potenzialgetrennte Stromversorgungseinrichtung 20 ist in der Figur 3 nur zur allgemeinen Erläuterung dargestellt. Die Stromversorgungseinrichtung 20 weist drei Spannungsversorgungspfade 210, 220 und 230 auf, die jeweils identisch ausgestaltet sein können und zur Erzeugung jeweils einer der drei Ausgangsspannungen Ua1, Ua2 und Ua3 dienen. Die drei Stromversorgungspfade 210, 220 und 230 weisen jeweils einen Transformator TF zur Potenzialtrennung, eine Pulsweitenmodulationseinrichtung PWM, einen Transistor Ts, eine Diode D und einen Kondensator C auf. Die Ansteuerung der Pulsweitenmodulationseinrichtung PWM erfolgt durch eine Kontrolleinrichtung 240 der Stromversorgungseinrichtung 20.

Die Spannungsversorgungspfade 210, 220 und 230 können jeweils so arbeiten, wie dies von herkömmlichen potenzialgetrennten Stromversorgungseinrichtungen der Fall ist, so dass diesbezüglich auf die allgemeine Fachliteratur verwiesen sei.

Die Kontrolleinrichtung 240 der Stromversorgungseinrichtung 20 weist vorzugsweise einen Steuereingang S240 auf, der mit dem Steuereingang S20 gemäß den Figuren 1 und 2 in Verbindung steht und es ermöglicht, die einzelnen Ausgangsspannungen Ua1, Ua2 und Ua3 entweder einzeln oder gestaffelt nacheinander einzuschalten, wie dies im Zusammenhang mit den Figuren 1 und 2 oben ausführlich erläutert wurde.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Anordnung (10) mit einer Eingangsseite (11) und einer von der Eingangsseite (11) elektrisch potenzialgetrennten Ausgangsseite (12) sowie mit einer potenzialgetrennten Stromversorgungseinrichtung (20), die aufweist: einen Eingang (E20) auf der Eingangsseite (11) der Anordnung (10) zum Anlegen einer Eingangsspannung (Ue) und mindestens zwei vom Eingang (E20) potenzialgetrennte Ausgänge (A21, A22, A23) auf der Ausgangsseite (12) der Anordnung (10) zur Ausgabe mindestens zweier Ausgangsspannungen (Ua1, Ua2, Ua3), **dadurch gekennzeichnet, dass**

   - an die mindestens zwei Ausgänge (A21, A22, A23) der potenzialgetrennten Stromversorgungseinrichtung (20) eine Überwachungseinrichtung (30) angeschlossen ist, die die Ausgangsspannungen (Ua1, Ua2, Ua3) auf das Erreichen einer ausgangsindividuell zugeordneten Mindestspannung (Umin1, Umin2, Umin3) überwacht und ausgangsseitig einen Strom (Is) mit einer Sollhöhe erzeugt, wenn alle Ausgangsspannungen (Ua1, Ua2, Ua3) ihre jeweilige ausgangsindividuell zugeordnete Mindestspannung (Umin1, Umin2, Umin3) erreichen,
   - an die Überwachungseinrichtung (30) ein Optokopplereingang (E40) eines Optokopplers (40) angeschlossen ist, dessen Optokopplerausgang (A40) mit einer elektrisch auf der Eingangsseite (11) der Anordnung (10) befindlichen Steuereinrichtung (50) verbunden ist, und
   - die Steuereinrichtung (50) ein Fehlersignal (Sf) erzeugt, wenn am Optokopplerausgang (A40) ein Ausgangssignal (Sa) vorliegt, das von dem bei einem Strom mit der genannten Sollhöhe auftretenden Sollausgangssignal über ein vorgegebenes Maß hinaus abweicht.

2. Anordnung nach Anspruch 1, **dadurch gekennzeichnet, dass**

   - die Überwachungseinrichtung (30) für jeden der Ausgänge (A21, A22, A23) der potenzialgetrennten Stromversorgungseinrichtung (20) jeweils eine gesteuerte Stromquelle (31, 32, 33) aufweist, die die Ausgangsspannung (Ua1, Ua2, Ua3) am jeweils zugeordneten Ausgang auf das Erreichen der ausgangsindividuell zugeordneten Mindestspannung (Umin1, Umin2, Umin3) überwacht und bei Erreichen der jeweiligen Mindestspannung ausgangsseitig einen Ausgangsstrom erzeugt und
   - die Stromquellen (31, 32, 33) ausgangsseitig an den Optokopplereingang (E40) des Optokopplers (40) angeschlossen sind und der Optokopplereingang (E40) des Optokopplers (40) mit dem aus den Ausgangsströmen der Stromquellen (31, 32, 33) gebildeten Summenstrom (Is) beaufschlagt ist.

3. Anordnung (10) nach Anspruch 2, **dadurch gekennzeichnet, dass**

   - die gesteuerten Stromquellen (31, 32, 33) jeweils einen Komparator (310, 320, 330) aufweisen, der die Ausgangsspannung (Ua1, Ua2, Ua3) am jeweils zugeordneten Ausgang auf das Erreichen der ausgangsindividuell zugeordneten Mindestspannung (Umin1, Umin2, Umin3) überwacht und bei Erreichen der jeweiligen Mindestspannung ausgangsseitig eine Komparatorausgangsspannung erzeugt, und am Komparatorausgang der Komparatoren jeweils ein Widerstand angeschlossen ist,
   - die Widerstände (R, R1, R2, R3) der Stromquellen (31, 32, 33) ausgangsseitig an den Optokopplereingang (E40) des Optokopplers (40) angeschlossen sind und
   - der Optokopplereingang (E40) des Optokopplers (40) mit dem Summenstrom (Is) der durch die Widerstände (R, R1, R2, R3) fließenden Ströme (I1, I2, I3) beaufschlagt ist.

4. Anordnung (10) nach Anspruch 3, **dadurch gekennzeichnet, dass**

   - die Widerstände (R) der Überwachungseinrichtung (30) gleich groß sind und
   - der von den Komparatorausgängen der Komparatoren (310, 320, 330) in den Optokopplereingang (E40) eingespeiste Summenstrom (Is) anzeigt, wie viele der Ausgangsspannungen die jeweilige Mindestspannung erreichen.

**5.** Anordnung (10) nach Anspruch 3,
**dadurch gekennzeichnet, dass**

- die Widerstände (R1, R2, R3) der Überwachungseinrichtung (30) unterschiedlich groß sind und
- der von den Komparatorausgängen der Komparatoren (310, 320, 330) in den Optokopplereingang (E40) eingespeiste Summenstrom (Is) anzeigt, welche der Ausgangsspannungen die jeweilige Mindestspannung erreichen.

**6.** Anordnung (10) nach Anspruch 5,
**dadurch gekennzeichnet, dass** die potenzialgetrennte Stromversorgungseinrichtung (20) n Ausgänge aufweist und die n Widerstände R1 bis Rn der Überwachungseinrichtung (30) von der Widerstandshöhe gestaffelt sind gemäß

$$R1 = (1 / (2^n - 1)) * Rg,$$

$$R2 = (2 / (2^n - 1)) * Rg, \ldots$$

$$Rn = (2^{(n-1)} / (2^n - 1)) * Rg,$$

wobei Rg den kleinsten vorgesehen Einzelwiderstandswert mit $2^n - 1$ multipliziert bezeichnet.

**7.** Anordnung (10) nach einem der voranstehenden Ansprüche, **dadurch gekennzeichnet, dass** die potenzialgetrennte Stromversorgungseinrichtung (20) einen Steuereingang (S20) aufweist, der ein individuelles Ein- und Ausschalten der Ausgangsspannungen (Ua1, Ua2, Ua3) und/oder ein zeitlich versetztes Einschalten der Ausgangsspannungen (Ua1, Ua2, Ua3) ermöglicht.

**8.** Anordnung (10) nach einem der voranstehenden Ansprüche, **dadurch gekennzeichnet, dass** die Steuereinrichtung (50) derart ausgestaltet ist, das sie zumindest bei Inbetriebnahme der potenzialgetrennten Stromversorgungseinrichtung (20) die Ausgangsspannungen (Ua1, Ua2, Ua3) der potenzialgetrennten Stromversorgungseinrichtung (20) einzeln nacheinander oder zeitlich versetzt einschaltet, die am Optokopplerausgang (A40) jeweils auftretenden Ausgangssignale unter Bildung von Referenzwerten misst und die Referenzwerte zum Kalibrieren der durch die Überwachungseinrichtung (30) und den Optokoppler (40) gebildeten Messstrecke und/oder zum Kalibrieren des Übertragungsverhaltens des Optokopplers (40) heranzieht.

**9.** Verfahren zum Überwachen einer Anordnung (10) mit einer Eingangsseite (11) und einer von der Eingangsseite (11) elektrisch potenzialgetrennten Ausgangsseite (12) sowie mit einer potenzialgetrennten Stromversorgungseinrichtung (20), die aufweist: einen Eingang (E20) auf der Eingangsseite (11) der Anordnung zum Anlegen einer Eingangsspannung (Ue) und mindestens zwei vom Eingang (E20) potenzialgetrennte Ausgänge (A21, A22, A23) auf der Ausgangsseite (12) der Anordnung (10) zur Ausgabe mindestens zweier Ausgangsspannungen (Ua1, Ua2, Ua3),
**dadurch gekennzeichnet, dass**

- die Ausgangsspannungen (Ua1, Ua2, Ua3) auf das Erreichen einer ausgangsindividuell zugeordneten Mindestspannung (Umin1, Umin2, Umin3) überwacht werden und ausgangsseitig ein Strom (Imax) mit einer Sollhöhe erzeugt wird, wenn alle Ausgangsspannungen (Ua1, Ua2, Ua3) ihre jeweilige ausgangsindividuell zugeordnete Mindestspannung (Umin1, Umin2, Umin3) erreichen, und
- der Strom in einen Optokopplereingang (E40) eines Optokopplers (40) eingespeist wird, dessen Optokopplerausgang (A40) mit einer elektrisch auf der Eingangsseite (11) der Anordnung (10) befindlichen Steuereinrichtung (50) verbunden ist, und
- ein Fehlersignal (Sf) erzeugt wird, wenn am Optokopplerausgang (A40) ein Ausgangssignal vorliegt, das von dem bei einem Strom mit der genannten Sollhöhe auftretenden Sollausgangssignal über ein vorgegebenes Maß hinaus abweicht.

**10.** Verfahren nach Anspruch 9,
**dadurch gekennzeichnet, dass**

- zumindest bei Inbetriebnahme der potenzialgetrennten Stromversorgungseinrichtung (20) die Ausgangsspannungen (Ua1, Ua2, Ua3) der potenzialgetrennten Stromversorgungseinrichtung (20) einzeln nacheinander oder zeitlich versetzt eingeschaltet werden,

- die am Optokopplerausgang (A40) jeweils auftretenden Ausgangssignale unter Bildung von Referenzwerten gemessen werden und

- die Referenzwerte zum Kalibrieren der durch die Überwachungseinrichtung (30) und den Optokoppler (40) gebildeten Messstrecke und/oder zum Kalibrieren des Übertragungsverhaltens des Optokopplers (40) herangezogen werden.

**Claims**

1. Assembly (10) having an input side (11) and an output side (12) which is electrically potential-isolated from the input side (11), and having a potential-isolated power supply device (20) which has: an input (E20) on the input side (11) of the assembly (10) for creating an input voltage (Ue) and at least two outputs (A21, A22, A23) which are potential-isolated from the input (E20) on the output side (12) of the assembly (10) for outputting at least two output voltages (Ua1, Ua2, Ua3),
**characterised in that**

   - a monitoring device (30) is connected to the at least two outputs (A21, A22, A23) of the potential-isolated power supply device (20), and monitors the output voltages (Ua1, Ua2, Ua3) for the attainment of a minimum voltage (Umin1, Umin2, Umin3) individually associated with an output and on the output side generates a current (Is) with a target level if all output voltages (Ua1, Ua2, Ua3) reach their minimum voltage (Umin1, Umin2, Umin3) individually associated with a respective output,
   - an optocoupler input (E40) of an optocoupler (40) is connected to the monitoring device (30), the optocoupler output (A40) of said optocoupler (40) being connected to a control device (50) located electrically on the input side (11) of the assembly (10), and
   - the control device (50) generates an error signal (Sf) if an output signal (Sa) is present at the optocoupler output (A40) which deviates by more than a predefined amount from the target output signal which occurs in the event of a current having the aforementioned target level.

2. Assembly according to claim 1,
**characterised in that**

   - the monitoring device (30) has a controlled current source (31, 32, 33) in each case for each of the outputs (A21, A22, A23) of the potential-isolated power supply device (20), which monitors the output voltage (Ua1, Ua2, Ua3) at the respective associated output for the attainment of the minimum voltage (Umin1, Umin2, Umin3) associated with an individual output and on attainment of the respective minimum voltage generates an output current on the output side and
   - the current sources (31, 32, 33) are connected on the output side to the optocoupler input (E40) of the optocoupler (40) and the summation current (Is) formed from the output currents of the current sources (31, 32, 33) is applied to the optocoupler input (E40) of the optocoupler (40).

3. Assembly (10) according to claim 2,
**characterised in that**

   - the controlled current sources (31, 32, 33) each have a comparator (310, 320, 330) which monitors the output voltage (Ua1, Ua2, Ua3) at the respectively associated output for the attainment of the minimum voltage (Umin1, Umin2, Umin3) associated with an individual output and on attainment of the respective minimum voltage generates a comparator output voltage on the output side, and in each case a resistor is connected at the comparator output of the comparators,
   - the resistors (R, R1, R2, R3) of the current sources (31, 32, 33) are connected on the output side to the optocoupler input (E40) of the optocoupler (40) and
   - the summation current (Is) of the currents (I1, I2, I3) flowing through the resistors (R, R1, R2, R3) is applied to the optocoupler input (E40) of the optocoupler (40).

4. Assembly (10) according to claim 3,
**characterised in that**

- the resistors (R) of the monitoring device (30) are of equal size and
- the summation current (Is) fed from the comparator outputs of the comparators (310, 320, 330) into the optocoupler input (E40) shows how many of the output voltages attain the respective minimum voltage.

5. Assembly (10) according to claim 3,
**characterised in that**

- the resistors (R1, R2, R3) of the monitoring device (30) are of different sizes and
- the summation current (Is) fed from the comparator outputs of the comparators (310, 320, 330) into the optocoupler input (E40) shows which of the output voltages attain the respective minimum voltage.

6. Assembly (10) according to claim 5,
**characterised in that**
the potential-isolated current supply device (20) has n outputs and the n resistors R1 to Rn of the monitoring device (30) are staggered by the resistance level in accordance with

$$R1 = (1 / (2^n-1)) * Rg,$$

$$R2 = (2 / (2^n-1)) * Rg, \ldots$$

$$Rn = (2^{(n-1)} / (2^n-1)) * Rg,$$

where Rg designates the smallest provided individual resistance value multiplied by $2^n$-1.

7. Assembly (10) according to one of the preceding claims,
**characterised in that**
the potential-isolated current supply device (20) has a control input (S20) which enables an individual activation and deactivation of the output voltages (Ua1, Ua2, Ua3) and/or an activation of the output voltages (Ua1, Ua2, Ua3) staggered over time.

8. Assembly (10) according to one of the preceding claims,
**characterised in that**
the control device (50) is designed such that at least during commissioning of the potential-isolated current supply device (20) it activates, individually one after the other or staggered over time, the output voltages (Ua1, Ua2, Ua3) of the potential-isolated current supply device (20), which at the optocoupler output (A40) measures output signals occurring in each case and forms reference values, and uses the reference values for calibrating the measured distance formed by the monitoring device (30) and the optocoupler (40) and/or for calibrating the transmission behaviour of the optocoupler (40).

9. Method for monitoring an assembly (10) having an input side (11) and an output side (12) which is electrically potential-isolated from the input side (11), and having a potential-isolated power supply device (20) which has: an input (E20) on the input side (11) of the assembly for creating an input voltage (Ue) and at least two outputs (A21, A22, A23) which are potential-isolated from the input (E20) on the output side (12) of the assembly (10) for outputting at least two output voltages (Ua1, Ua2, Ua3),
**characterised in that**

- the output voltages (Ua1, Ua2, Ua3) are monitored for the attainment of a minimum voltage (Umin1, Umin2, Umin3) associated with an individual output and on the output side a current (Imax) with a target level is generated if all output voltages (Ua1, Ua2, Ua3) attain their minimum voltage (Umin1, Umin2, Umin3) associated with a respective individual output, and
- the current is fed into an optocoupler input (E40) of an optocoupler (40), the optocoupler output (A40) of which is connected to a control device (50) electrically located on the input side (11) of the assembly (10), and
- an error signal (Sf) is generated if an output signal is present at the optocoupler output (A40), which deviates by more than a predefined amount from the target output signal which occurs in the event of a current having the aforementioned target level.

**10.** Method according to claim 9,
**characterised in that**

- at least during commissioning of the potential-isolated current supply device (20) the output voltages (Ua1, Ua2, Ua3) of the potential-isolated current supply device (20) are activated individually one after the other or staggered over time,
- the output signals occurring in each case at the optocoupler output (A40) are measured and reference values are formed, and
- the reference values are used for calibrating the measured distance formed by the monitoring device (30) and the optocoupler (40) and/or for calibrating the transmission behaviour of the optocoupler (40).

**Revendications**

**1.** Agencement (10), comprenant un côté (11) d'entrée et un côté (12) de sortie séparé en potentiel électriquement du côté (11) d'entrée, ainsi qu'un dispositif (10) d'alimentation en courant séparé en potentiel, qui comprend : une entrée (E20) du côté (11) d'entrée de l'agencement (10), pour l'application d'une tension (Ue) d'entrée, et au moins deux sorties (A21, A22, A23) séparées en potentiel de l'entrée (E20) du côté (12) de sortie de l'agencement (10), pour la sortie d'au moins deux tensions (Ua1, Ua2, Ua3) de sortie,
**caractérisé en ce que**

- au au moins deux sorties (A21, A22, A23) du dispositif (20) d'alimentation en courant séparé en potentiel, est raccordé un dispositif (30) de contrôle, qui contrôle que les tensions (Ua1, Ua2, Ua3) de sortie atteignent une tension (Umin1, Umin2, Umin3) minimum associée individuellement à la sortie et qui produit, du côté de la sortie, un courant (Is) ayant une intensité de consigne, si toutes les tensions (Ua1, Ua2, Ua3) de sortie atteignent leur tension (Umin1, Umin2, Umin3) associée individuellement à leur sortie respective,
- au dispositif (30) de contrôle est raccordée une entrée (E40) d'un optocoupleur (40), dont la sortie (A40) est reliée à un dispositif (5) de commande se trouvant électriquement du côté (11) d'entrée de l'agencement (10) et
- le dispositif (50) de commande produit un signal (Sf) de défaut, s'il y a, à la sortie (A40) de l'optocoupleur, un signal (Sa) de sortie, qui s'écarte au-delà d'une valeur donnée à l'avance du signal de sortie de consigne se produisant pour un courant ayant l'intensité de consigne mentionnée.

**2.** Agencement suivant la revendication 1,
**caractérisé en ce que**

- le dispositif (30) de contrôle a, pour chacune des sorties (A21, A22, A23) du dispositif (20) d'alimentation en courant séparé en potentiel, respectivement une source (31, 32, 33) de courant commandée, qui contrôle que la tension (Ua1, Ua2, Ua3) de sortie sur chaque sortie associée atteint la tension (Umin1, Umin2, Umin3) minimum associée individuellement à la sortie et qui produit un courant de sortie, du côté de la sortie, lorsque la tension minimum respective est atteinte et
- les sources (31, 32, 33) de courant sont raccordées du côté de la sortie à l'entrée (E40) de l'optocoupleur (40) et l'entrée (E40) de l'optocoupleur (40) est alimentée en le courant (Is) somme formé des courants de sortie des sources (31, 32, 33) de courant.

**3.** Agencement (10) suivant la revendication 2,
**caractérisé en ce que**

- les sources (31, 32, 33) de courant commandées ont chacune un comparateur (310, 320, 330), qui contrôle que la tension (Ua1, Ua2, Ua3) de sortie a atteint, à la sortie associée, la tension (Umin1, Umin2, Umin3) minimum associée individuellement à la sortie et, lorsque la tension minimum est atteinte, produit, du côté de la sortie, une tension de sortie de comparateur et, à la sortie des comparateurs, est raccordée respectivement une résistance,
- les résistances (R, R1, R2, R3) des sources (31, 32, 33) de courant sont raccordées du côté de la sortie à l'entrée (E40) de l'optocoupleur (40) et
- l'entrée (E40) de l'optocoupleur (40) est alimentée en le courant (Is) somme des courants (I1, I2, I3) passant dans les résistances (R, R1, R2, R3).

**4.** Agencement (10) suivant la revendication 3,
**caractérisé en ce que**

- les résistances du dispositif (30) de contrôle sont égales et
- le courant (Is) somme injecté dans l'entrée (E40) de l'optocoupleur par les sorties des comparateurs (310, 320, 330) indique le nombre des tensions de sortie qui ont atteint la tension minimum.

**5.** Agencement (10) suivant la revendication 3,
**caractérisé en ce que**

- les résistances (R1, R2, R3) du dispositif (30) de contrôle ont des valeurs différentes et
- le courant (Is) somme injecté par les sorties des comparateurs (310, 320, 330) dans l'entrée (E40) de l'optocoupleur indique les tensions de sortie qui ont atteint la tension minimum.

**6.** Agencement (10) suivant la revendication 5,
**caractérisé en ce que**
le dispositif (20) d'alimentation en courant séparé en potentiel a n sorties et les n résistances R1 à Rn du dispositif (10) de contrôle sont étagées par le niveau de résistance suivant

$$R1 = (1 / (2^n-1)) * Rg,$$

$$R2 = (2 / 2^n-1)) * Rg, \ldots$$

$$Rn = (2^{(n-1)} / (2^n-1)) * Rg,$$

dans lesquelles Rg désigne la valeur individuelle de résistance la plus petite prévue multipliée par $2^n$-1.

**7.** Agencement (10) suivant l'une des revendications précédentes,
**caractérisé en ce que**
le dispositif (20) d'alimentation en courant séparé en potentiel a une entrée (S20) de commande, qui rend possible une application et une interruption individuelle des tensions (Ua1, Ua2, Ua3) de sortie et/ou une application décalée dans le temps des tensions (Ua1, Ua2, Ua3) de sortie.

**8.** Agencement (10) suivant l'une des revendications précédentes,
**caractérisé en ce que**
le dispositif (50) de commande est conformé de manière, à la mise en service du dispositif (20) d'alimentation en courant séparé en potentiel, à appliquer individuellement, les unes après les autres ou d'une manière décalée dans le temps, les tensions (Ua1, Ua2, Ua3) de sortie du dispositif (1) d'alimentation en courant séparé en potentiel, à mesurer avec formation de valeurs de référence, les signaux de sortie se produisant respectivement à la sortie (A40) de l'optocoupleur et tirer parti des valeurs de référence pour l'étalonnage des sections de mesure formées par le dispositif (30) de contrôle et par l'optocoupleur (40) et/ou pour étalonner la propriété de transmission de l'optocoupleur (40).

**9.** Procédé de contrôle d'un agencement (10), comprenant un côté (11) d'entrée et un côté (12) de sortie séparé en potentiel électriquement du côté (11) d'entrée, ainsi qu'un dispositif (10) d'alimentation en courant séparé en potentiel, qui comprend : une entrée (E20), du côté (11) d'entrée de l'agencement (10), pour l'application d'une tension (Ue) d'entrée et au moins deux sorties (A21, A22, A23) séparées en potentiel de l'entrée (E20), du côté (12) de sortie de l'agencement (10), pour la sortie d'au moins deux tensions (Ua1, Ua2, Ua3) de sortie,
**caractérisé en ce que**

- on contrôle que les tensions (Ua1, Ua2, Ua3) de sortie atteignent une tension (Umin1, Umin2, Umin3) minimum associée individuellement à la sortie et on produit, du côté de la sortie, un courant (Imax) ayant une intensité de consigne, lorsque toutes les tensions (Ua1, Ua2, Ua3) de sortie atteignent leur tension (Umin1, Umin2, Umin3) minimum respective associée individuellement à la sortie et

- on injecte le courant dans une entrée (E40) d'un optocoupleur (40), dont la sortie (A40) est reliée à un dispositif (50) de commande se trouvant électriquement du côté (11) de l'entrée de l'agencement (10) et

- on produit un signal (Sf) de défaut, s'il y a, à la sortie (A40) de l'optocoupleur, un signal de sortie qui s'écarte au-delà d'une valeur donnée à l'avance du signal de sortie de consigne se produisant pour un courant ayant l'intensité de consigne mentionnée.

**10.** Procédé suivant la revendication 9,
**caractérisé en ce que**

- on applique, au moins lors de la mise en service du dispositif (20) d'alimentation en courant séparé en potentiel, les tensions (Ua1, Ua2, Ua3) de sortie du dispositif (20) d'alimentation en courant séparé en potentiel, individuellement les unes après les autres ou d'une manière décalée dans le temps,

- on mesure, avec formation de valeurs de référence, les signaux de sortie se produisant respectivement à la sortie (A40) de l'optocoupleur et

- on tire parti des valeurs de référence pour étalonner les sections de mesure formées par le dispositif (30) de contrôle et par l'optocoupleur (40) et/ou pour étalonner la propriété de transmission de l'optocoupleur (40).

FIG 1

EP 3 039 779 B1

FIG 2

EP 3 039 779 B1

FIG 3

EP 3 039 779 B1

**EP 3 039 779 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10223010 A1